# EUROPEAN PATENT APPLICATION

(11) **EP 4 354 576 A1**
(43) Date of publication of application: **17.04.2024**
(21) Application number: 22919461.8
(22) Date of filing: 14.01.2022
(51) Int. Cl.: H01M 10/0525

(54) **BATTERY CELL AND MANUFACTURING METHOD AND SYSTEM THEREFOR, BATTERY AND ELECTRIC DEVICE**

(71) Applicant: Contemporary Amperex Technology Co., Limited, Ningde, Fujian 352100 (CN)
(72) Inventor: CHEN, Wei, Ningde, Fujian 352100 (CN); ZHENG, Donglai, Ningde, Fujian 352100 (CN); SHI, Dongyang, Ningde, Fujian 352100 (CN); LI, Chuan, Ningde, Fujian 352100 (CN); GUAN, Donglai, Ningde, Fujian 352100 (CN)
(74) Representative: Gong, Jinping
(86) International application number: PCT/CN2022/072032
(87) International publication number: WO 2023/133806

(57) **Abstract**

The present application provides a battery cell, a manufacturing method and system thereof, a battery, and a powered device. The battery cell comprises a housing, an electrode assembly and an end cap. The housing has an opening at an end along a first direction. The electrode assembly is contained in the housing, and the electrode assembly has a main body and tabs connected to the main body. The end cap is configured for covering the opening. The housing comprises a first side plate having a first plate portion and a second plate portion both arranged along the first direction, and wherein the second plate portion is located at an end of the first plate portion near the opening, and the second plate portion has a thickness greater than that of the first plate portion. The second plate portion is configured for welding with the end cap and forming a welded portion; an end of the second plate portion near the first plate portion extends beyond the welded portion in the first direction; the main body is not overlapped with the second plate portion in a thickness direction for the first side plate.

## Description

### FIELD OF THE INVENTION

The present application relates to the field of battery technology, and more specifically, to a battery cell, a manufacturing method and system thereof, a battery, and a powered device.

### BACKGROUND OF THE INVENTION

Battery cells are widely used in electronic devices, such as mobile phones, laptop computers, electro-mobiles, electric cars, electric airplanes, electric ships, electric toy cars, electric toy ships, electric toy airplanes and electric tools, etc. The battery cells may include nickelcadmium battery cells, nickel-hydrogen battery cells, lithium-ion battery cells, secondary alkaline zinc-manganese battery cells, etc.

In the development of battery technology, in addition to improving the performance of battery cells, safety issues are also a problem that cannot be ignored. If the safety of the battery cells cannot be guaranteed, the battery cells cannot be used. Therefore, how to enhance the safety of the battery cells is an urgent technical problem in battery technology.

### SUMMARY OF THE INVENTION

The present application provides a battery cell, a manufacturing method and system thereof, a battery and a powered device, which may enhance the safety of the battery cell.

In a first aspect, an embodiment of the present application provides a battery cell, including a housing, an electrode assembly and an end cap. The housing has an opening at an end along a first direction. The electrode assembly is contained in the housing, and the electrode assembly has a main body and tabs connected to the main body. The end cap is configured for covering the opening. The housing comprises a first side plate having a first plate portion and a second plate portion both arranged along the first direction, and the second plate portion is located at an end of the first plate portion near the opening, and the second plate portion has a thickness greater than that of the first plate portion. The second plate portion is configured for welding with the end cap and forming a welded portion; an end of the second plate portion near the first plate portion extends beyond the welded portion in the first direction; the main body is not overlapped with the second plate portion in a thickness direction for the first side plate.

In the present application, a thickness of the second plate portion near the opening is increased and the end of the second plate portion near the first plate portion is extended beyond the welded portion to ensure the strength of the first side plate near the welded portion, so as to reduce the risk of cracking of the first side plate and improve the safety. The main body is not overlapped with the second plate portion in the thickness direction for the first side plate, which may reduce the risk of the main body directly colliding with or squeezing the second plate portion, so as to further reduce the risk of cracking of the second plate portion and improve the safety.

In some implementations, the second plate portion protrudes from an inner surface of the first plate portion.

In the above implementations, when the second plate portion has a certain thickness, the second plate portion protruding from the inner surface of the first plate portion may reduce a size of the second plate portion protruding from an outer surface of the first plate portion, so as to further reduce the maximum size of the housing, fully utilize inner space of the housing, and increase energy density of the battery cell.

In some embodiments, the battery cell further includes an insulating member disposed between the end cap and the main body and abutted against the main body. An end of the second plate portion near the first plate portion does not protrude beyond a surface of the insulating member abutting against the main body in the first direction.

In the above embodiments, the insulating member may insulate and isolate the end cap from the main body, so as to reduce the risk that the end cap conducting the positive and negative electrodes in the main body and improve the safety. The insulating member is abutted against the main body along the first direction, so as to reduce shaking amplitude of the main body during battery cell vibration, reduce the risk of misalignment of positive and negative electrode plates, and improve charging and discharging performance of electrode assembly. The insulating member may limit the position of the main body along the first direction, so as to reduce the possibility of the main body colliding with the second plate portion during battery cell vibration and reduce the risk of cracking of the second plate portion.

In some embodiments, an outer surface of the first plate portion is flush with an outer surface of the second plate portion.

The above implementations may ensure the flatness of the outer surface of the first side plate and improve the appearance of the housing.

In some implementations, the second plate portion includes a base portion and a first transition portion, and the first transition portion is connected between the base portion and the first plate portion; a thickness of the first transition portion is gradually decreasing along a direction away from the base portion.

In the above implementations, by providing the first transition portion, a smooth transition may be achieved at a junction of the first plate portion and the second plate portion, reducing stress concentration and reducing the risk of cracking of the first side plate.

In some implementations, the second plate portion is connected to at least a middle region of the first plate portion along a second direction, and the second direction is perpendicular to the first direction and the thickness direction.

During a charging process of the electrode assembly, the main body will expand and squeeze the first plate portion; and during a discharging process of the electrode assembly, the main body will shrink. Therefore, the expansion and shrinking of the main body will cause the first side plate to swing back and forth with the welded portion as a base point. The larger the expansion of a middle portion of the main body along the second direction, the greater the oscillation amplitude of a middle portion of the first side plate along the second direction. Therefore, a region of the first side plate located in the middle along the second direction and close to the welding portion is easy to crack under the combined action of thermal stress and swing stress. In the above implementations, the second plate portion is connected to at least the middle region of the first plate portion along the second direction, which may enhance the strength of the area with greater stress on the first side plate to reduce the risk of cracking on the first side plate.

In some implementations, the second plate portion is continuously disposed in the second direction, and an edge of the second plate portion along the second direction is flush with an edge of the first plate portion along the second direction.

In the above implementations, an end of the first side plate near the opening is thickened as a whole, so as to further reduce the risk of cracking of the first side plate.

In some implementations, the second plate portion comprises a base portion and two second transition portions, and the two second transition portions are respectively located at two ends of the base portion along the second direction; thicknesses of the second transition portions are gradually decreasing along a direction away from the base portion.

In the above implementations, by providing the second transition portions, a smooth transition may be achieved at a junction between the second plate portions and other parts of the housing, reducing stress concentration and reducing the risk of cracking of the first side plate.

In some implementations, the housing comprises two first side plates oppositely disposed along the thickness direction and two second side plates oppositely disposed along the second direction, the first direction, the second direction and the thickness direction are perpendicular to each other. Each of the second side plates is provided with a recess, and the recess is recessed from an end surface of the second side plate along the first direction; a portion of the end cap is contained in the recess and abuts against a bottom surface of the recess. A thickness of a portion of the second side plate corresponding to a side surface of the recess is greater than the thickness of the first plate portion.

In the above implementations, the bottom surface of the recess may support the end cap and may limit the position of the end cap during the end cap extends into the housing, so as to prevent the end cap from excessively protruding into the housing. The portion of the second side plate corresponding to a side surface of the recess may be configured for welding with the end cap. Even if the present embodiment provides a recess on the second side plate, the strength of the portion of the second side plate corresponding to the side surface of the recess can be guaranteed, so as to reduce the risk of cracking the second side plate.

In some implementations, the end of the second plate portion near the first plate portion extends beyond the bottom surface of the recess in the first direction.

The bottom surface of the recess is configured to support the end cap, so the bottom surface of the recess will also limit the position of the end cap. In the above implementations, the end of the second plate portion near the first plate portion extends beyond the bottom surface of the recess, so that the end of the second plate portion near the first plate portion extends beyond the end cap and the welded portion, thereby ensuring the strength of the first side plate at an area near the welded portion, reducing the risk of cracking of the first side plate and improving the safety.

In some implementations, the electrode assembly is a wound structure and comprises a straight region, and the electrode assembly has pole pieces comprising a plurality of straight portions located in the straight region, the plurality of straight portions are stacked along the thickness direction.

Since the expansion of the electrode assembly along the stacking direction of the straight portions is the largest, the first side plate is subjected to a greater force; in the above implementations, the thickness of the second plate portion is increased to reduce the risk of cracking of the first side plate.

In some implementations, the electrode assembly comprises a plurality of pole pieces stacked along the thickness direction.

In the above implementations, since the expansion of the electrode assembly along the stacking direction of the plurality of pole pieces is the largest, the first side plate is subjected to a greater force; in the above implementations, the thickness of the second plate portion is increased to reduce the risk of cracking of the first side plate.

In some implementations, in the first direction, a ratio of a size L1 of the welded portion to a total size L2 of the second plate portion is 0.1-0.5.

The smaller the value of L1/L2, the lower the connection strength between the end cap and the second plate portion; if the value of L1/L2 is too small, the connection between the end cap and the second plate portion is prone to failure. The larger the value of L1/L2, the smaller the distance between the welded portion and the first plate portion; if the value of L1/L2 is too large, the thermal stress generated by welding may be transmitted to the first plate portion, thus causing the risk of cracking of the first plate portion. In the above implementations, the value of L1/L2 is limited to 0.1-0.5 to ensure the strength of the connection between the end cap and the second plate portion and the strength of the first plate portion.

In some implementations, a ratio of the thickness of the second plate portion to the thickness of the first plate portion is 1.05-3.

When the first plate portion has a certain thickness, the greater the thickness of the second plate portion, the higher the strength of the second plate portion, and the less likely the second plate portion will crack. Of course, the greater the thickness of the second plate portion, the greater the space occupied by the second plate portion, the greater the weight of the housing, and the lower the energy density of the battery cell. In the above implementations, the ratio of the thickness of the second plate portion to the thickness of the first plate portion is limited to 1.05-3 to balance the strength of the second plate portion and the energy density of the battery cell.

In a second aspect, an embodiment of the present application provides a battery, including a plurality of the battery cells of any embodiments of the first aspect.

In a third aspect, an embodiment of the present application provides an powered device, including the battery cell of any embodiments of the first aspect, and the battery cell is configured for providing electric energy.

In a fourth aspect, an embodiment of the present application provides a method for manufacturing a battery cell, including:
Providing a housing having an opening at an end along a first direction, wherein the housing comprises a first side plate having a first plate portion and a second plate portion both arranged along the first direction, and wherein the second plate portion is located at an end of the first plate portion near the opening, and the second plate portion has a thickness greater than that of the first plate portion;
Providing an electrode assembly and an end cap, the electrode assembly having a main body and tabs connected to the main body;
Installing the electrode assembly into the housing;
Covering the opening with the end cap, and welding the second plate portion with the end cap to form a welded portion;
Wherein the end of the second plate portion near the first plate portion extends beyond the welded portion in the first direction; the main body is not overlapped with the second plate portion in a thickness direction for the first side plate.

In a fifth aspect, an embodiment of the present application provides a battery cell manufacturing system, including a first providing device, a second providing device, a first assembling device, and a second assembling device. The first providing device is configured for providing a housing having an opening at an end along a first direction, wherein the housing comprises a first side plate having a first plate portion and a second plate portion both arranged along the first direction, and wherein the second plate portion is located at an end of the first plate portion near the opening, and the second plate portion has a thickness greater than that of the first plate portion. The second providing device is configured for providing an electrode assembly and an end cap, the electrode assembly having a main body and tabs connected to the main body. The first assembling device is configured for installing the electrode assembly into the housing. The second assembling device is configured for covering the opening with the end cap and welding the second plate portion with the end cap to form a welded portion. An end of the second plate portion near the first plate portion extends beyond the welded portion in the first direction; the main body is not overlapped with the second plate portion in a thickness direction for the first side plate.

### BRIEF DESCRIPTION OF THE DRAWINGS

In order to more clearly illustrate the technical solutions of the embodiments of the present application, the following will briefly introduce the accompanying drawings that need to be used in the embodiments of the present application. Obviously, the accompanying drawings described below are only some embodiments of the present application. Those of ordinary skill in the art may also obtain other drawings based on the accompanying drawings without paying creative efforts.
Fig. 1 is a schematic structural diagram of a vehicle provided by some embodiments of the present application;
Fig. 2 is a schematic exploded view of a battery provided by some embodiments of the present application;
Fig. 3 is a schematic structural view of the battery module shown in Fig. 2;
Fig. 4 is a schematic exploded view of a battery cell provided by some embodiments of the present application;
Fig. 5 is a schematic top view of a battery cell provided by some embodiments of the present application;
Fig. 6 is a schematic cross-sectional view of the battery cell shown in Fig. 5 along a direction A-A;
Fig. 7 is an enlarged schematic view of the battery cell shown in Fig. 6 at a circle frame C;
Fig. 8 is a schematic top view of a housing of a battery cell provided by some embodiments of the present application;
Fig. 9 is a schematic cross-sectional view of the battery cell shown in Fig. 5 along a B-B direction;
Fig. 10 is an enlarged schematic view of the battery cell shown in Fig. 9 at a circle D;
Fig. 11 is a schematic structural view of a housing of a battery cell provided in some embodiments of the present application;
Fig. 12 is an enlarged schematic view of the housing shown in Fig. 11 at a circle frame E;
Fig. 13 is a schematic structural view of an electrode assembly of a battery cell provided in some embodiments of the present application;
Fig. 14 is a schematic structural view of an electrode assembly of a battery cell provided in further embodiments of the present application;
Fig. 15 is a schematic flow chart of a method for manufacturing a battery cell provided in some embodiments of the present application;
Fig. 16 is a schematic block diagram of a system for manufacturing a battery cell provided by some embodiments of the present application.

In the accompanying drawings, the drawings are not drawn to scale.

### DETAILED DESCRIPTION

In order to make the purpose, technical solutions and advantages of the embodiments of the present application clearer, the technical solutions in the embodiments of the present application will be clearly described below in conjunction with the drawings in the embodiments of the present application. Obviously, the described embodiments are a portion of the embodiments of this application, rather than all of them. Based on the embodiments in this application, all other embodiments obtained by ordinary technical personnel in this field without creative labor fall within the scope of protection in this application.

Unless otherwise defined, all technical and scientific terms used in this application have the same meaning as commonly understood by those skilled in the art; the terms used in this application in the description of the application are only to describe specific embodiments, but not intended to limit the present application; the terms "comprising" and "having" and any variations thereof in the description, claims and brief description of the drawings of the present application are intended to cover non-exclusive inclusion. The terms "first", "second" and the like in the description, claims and brief description of the drawings of the present application are used to distinguish different objects, rather than to describe a specific sequence or primary-subordinate relationship.

Reference to an "embodiment" in this application means that a particular feature, structure, or characteristic described in connection with the embodiment may be included in at least one embodiment of the present application. The occurrences of this phrase in various places in the specification are not necessarily all referring to the same embodiment, nor are separate or alternative embodiments mutually exclusive of other embodiments.

In the description of this application, it should be noted that, unless otherwise clearly stipulated and limited, the terms "installing", "connecting", "bonding" and "attaching" should be understood in a broad sense, for example, it may be a fixed connection, a detachable connection, or an integrated connection; it may be a direct connection, or an indirect connection through an intermediate medium, or it may be an internal connection between two components. For ordinary technical skilled in the art, the specific meanings of the above terms in this application can be understood based on specific circumstances.

The term "and/or" in this application is only an association relationship describing associated objects, which means that there may be three relationships, for example, A and/or B, which means: A exists alone, A and B exist simultaneously, and B exist alone. In addition, the character "/" in this application generally indicates that the contextual objects have an "or" relationship.

In the embodiments of the present application, the same reference numerals denote the same component, and for the sake of brevity, detailed descriptions of the same component are omitted in different embodiments. It should be understood that the thickness, length, width and other dimensions of the various components in the embodiments of the application shown in the drawings, as well as the overall thickness, length and width of the integrated device, are for illustrative purposes only, and should not constitute any limitation to the application.

The term "a plurality of" in this application refers to two or more (including two).

The term "parallel" in this application includes not only the absolutely parallel situation, but also the roughly parallel situation that is generally recognized in engineering; at the same time, the term "perpendicular" not only includes the absolutely perpendicular situation, but also the roughly perpendicular situation that is generally recognized in engineering.

In this application, the battery cell may include lithium-ion secondary battery cell, lithium-ion primary battery cell, lithium-sulfur battery cell, sodium-lithium-ion battery cell, sodium-ion battery cell, or magnesium-ion battery cell, or the like, which is not limited by the embodiments of the present application.

The battery mentioned in the embodiments of this application refers to a single physical module that includes one or more battery cells to provide higher voltage and capacity. For example, the battery mentioned in this application may be a battery module or a battery pack, etc. The battery generally include a box used to encapsulate one or more battery cells. The box can prevent liquids or other foreign objects from affecting the charging or discharging of the battery cell.

The battery cell includes an electrode assembly and an electrolyte, and the electrode assembly includes a positive pole piece, a negative pole piece and a separator. The battery cell works primarily by moving metal ions between the positive and negative pole pieces. The positive pole piece includes a positive electrode current collector and a positive electrode active material layer, and the positive electrode active material layer is coated on a surface of the positive electrode current collector; the positive electrode current collector includes a positive electrode current collector portion and a positive electrode tab, and the positive electrode current collector portion is coated with the positive electrode active material layer, the positive electrode tab is not coated with the positive electrode active material layer. Taking a lithium-ion battery as an example, the material of the positive electrode current collector may be aluminum, and the positive electrode active material layer includes positive electrode active materials, which may be lithium cobaltate, lithium iron phosphate, ternary lithium or lithium manganate. The negative pole piece includes a negative electrode current collector and a negative electrode active material layer, and the negative electrode active material layer is coated on a surface of the negative electrode current collector; the negative electrode current collector includes a negative electrode current collector portion and a negative electrode tab, and the negative electrode current collector portion is coated with the negative electrode active material layer, the negative electrode tab is not coated with the negative electrode active material layer. The material of the negative electrode current collector may be copper, and the negative electrode active material layer includes negative electrode active materials, which may be carbon or silicon. The material of the spacer may be PP (polypropylene, polypropylene) or PE (polyethylene, polyethylene), etc.

The battery cell also includes a housing and an end cap, the housing has an opening, and the end cap covers the opening and is sealingly connected to form a sealed space for accommodating the electrode assembly and the electrolyte.

In the related art, the housing and the end cap are connected by welding. The welding may not only ensure the connection strength between the housing and the end cap, but also realize the sealing between them.

The inventors found that after welding, the housing will form a heat-affected zone near a molten pool, and the heat-affected zone will be affected by residual thermal stress, resulting in lower strength of the heat-affected zone than other regions. When the heat-affected zone is squeezed during the use of the battery cell, the housing may crack in the heat-affected zone, causing electrolyte leakage, making the battery cell to fail, and resulting in a safety risk.

In view of this, an embodiment of the present application provides a battery cell, which includes a housing, an electrode assembly, and an end cap. The housing has an opening at an end along a first direction. The electrode assembly is contained in the housing, and the electrode assembly has a main body and tabs connected to the main body. The end cap is configured for covering the opening. The housing comprises a first side plate having a first plate portion and a second plate portion both arranged along the first direction, and the second plate portion is located at an end of the first plate portion near the opening, and the second plate portion has a thickness greater than that of the first plate portion. The second plate portion is configured for welding with the end cap and forming a welded portion; the end of the second plate portion near the first plate portion extends beyond the welded portion in the first direction; the main body is not overlapped with the second plate portion in a thickness direction for the first side plate. In the present application, a thickness of the second plate portion near the opening is increased to ensure the strength of the first side plate near the welded portion, so as to reduce the risk of cracking of the first side plate and improve the safety. The main body is not overlapped with the second plate portion in the thickness direction for the first side plate, which may reduce the risk of the main body directly colliding with or squeezing the second plate portion, so as to further reduce the risk of cracking of the second plate portion.

The battery cell described in the embodiments of the present application are applicable to a battery and a powered device using the battery.

The powered device may be vehicles, mobile phones, portable devices, laptop computers, ships, spacecraft, electric toys, and electric tools, etc. The vehicles may be fuel vehicles, gas vehicles or new energy vehicles, and the new energy vehicles may be pure electric vehicles, hybrid vehicles or extended-range vehicles, etc.; the spacecraft include airplanes, rockets, space shuttles and spacecraft, etc.; the electric toys include fixed type or mobile electric toys, such as game consoles, electric car toys, electric boat toys and electric airplane toys, etc.; the electric tools include metal cutting electric tools, grinding electric tools, assembly electric tools and railway electric tools, for example, electric drills, electric grinders, electric wrenches, electric screwdrivers, electric hammers, impact drills, concrete vibrators, electric planers, and the like. The above powered devices are not subject to special restrictions in the embodiments of this application.

In the following embodiments, for the convenience of illustration, the powered device is taken as an example for description.

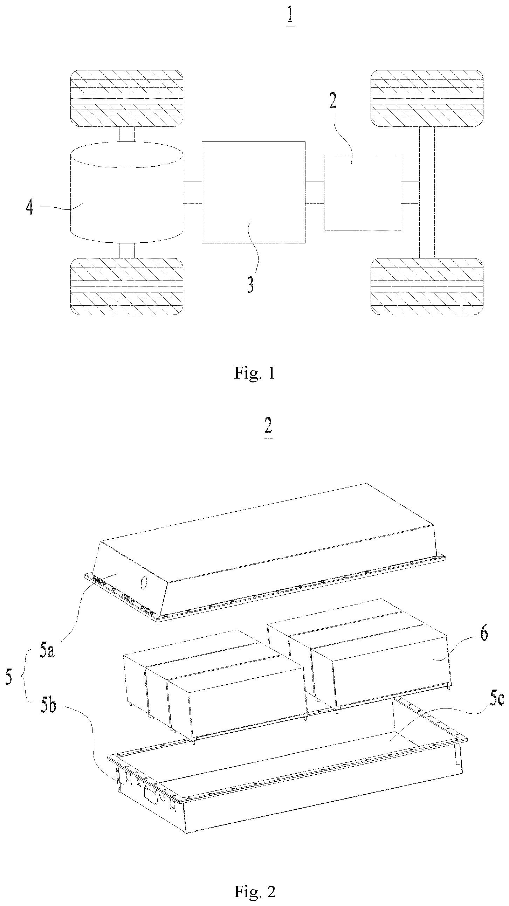

Fig. 1 is a schematic structural view of a vehicle provided by some embodiments of the present application.

As shown in Fig. 1, a battery 2 is arranged inside a vehicle 1, and the battery 2 may be arranged at the bottom, head or tail of the vehicle 1. The battery 2 may be configured for power supply of the vehicle 1, for example, the battery 2 may be served as an operating power source of the vehicle 1.

The vehicle 1 may further include a controller 3 and a motor 4, the controller 3 is used configured to control the battery 2 to supply power to the motor 4, for example, to meet the power requirements for starting, navigating and running the vehicle 1.

In some embodiments of the present application, the battery 2 may not only be used as an operating power source for the vehicle 1, but may also be used as a driving power source for the vehicle 1 to provide driving power for the vehicle 1 instead of or partially replacing fuel oil or natural gas.

Fig. 2 is a schematic exploded view of a battery provided by some embodiments of the present application.

As shown in Fig. 2, the battery 2 includes a housing 5 and a battery cell (not shown in Fig. 2), and the battery cell is accommodated in the housing 5.

The housing 5 is configured to accommodate the battery cell, and the housing 5 may have various structures. In some embodiments, the housing 5 may include a first housing portion 5a and a second housing portion 5b covered with each other, the first housing portion 5a and the second housing portion 5b jointly define an accommodating space 5c for accommodating the battery cell. The second housing portion 5b may be a hollow structure with one end open, the first housing portion 5a is a plate-shaped structure, and the first housing portion 5a covers an opening end of the second housing portion 5b to form the housing 5 with the accommodating space 5c; the first housing portion 5a and the second housing portion 5b may both be a hollow structure with one end opening, an opening end of the first housing portion 5a covers an opening end of the second housing portion 5b to form the housing 5 with the accommodating space 5c. Of course, the first housing portion 5a and the second housing portion 5b may be in various shapes, such as a cylinder, a cuboid, and the like.

In order to improve the sealing performance after connecting the first housing portion 5a and the second housing portion 5b, a sealing element such as sealant, sealing ring, etc. may also be installed between the first housing portion 5a and the second housing portion 5b.

Assuming that the first housing portion 5a covers the top of the second housing portion 5b, the first housing portion 5a may also be called an upper housing cover, and the second housing portion 5b may also be called a lower housing.

In the battery 2, there may be one or more battery cells. If there are a plurality of battery cells, the plurality of battery cells may be connected in series, in parallel or in a series-parallel connection. The series-parallel connection means that there are both series and parallel connections between the plurality of battery cells. The plurality of battery cells may be directly connected in series or in parallel or in the series-parallel connection, and then the plurality of battery cells as a whole are accommodated in the housing 5; and of course, it is also possible to first connect the plurality of battery cells in series or parallel or the series-parallel connection to form a battery module 6, and then a plurality of battery modules 6 are connected in series or in parallel or in the series-parallel connection to form as a whole, and are contained in the housing 5.

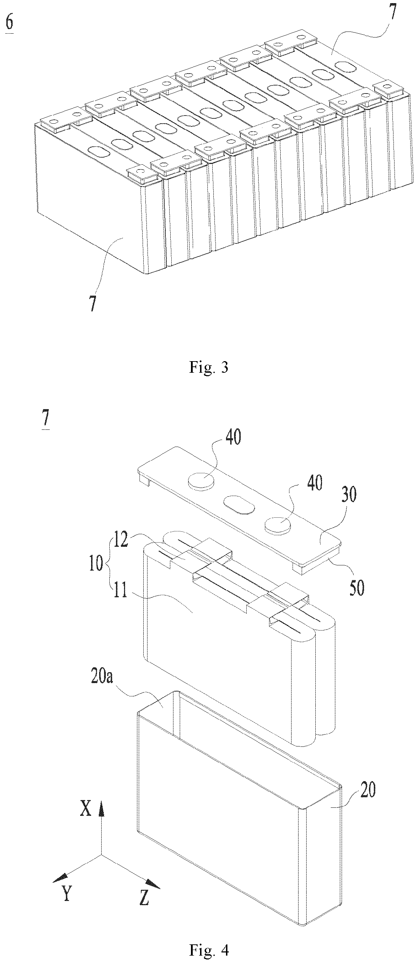

Fig. 3 is a schematic structural view of the battery module shown in Fig. 2.

As shown in Fig. 3, in some embodiments, there are a plurality of battery cells 7, and the plurality of battery cells 7 are connected in series, in parallel, or in the series-parallel connection to form a battery module 6. A plurality of battery modules 6 are connected in series, in parallel or in the series-parallel connection to form as a whole, and accommodated in the housing 5.

The plurality of battery cells 7 in the battery module 6 may be electrically connected through a confluence component, so as to realize parallel connection, series connection or series-parallel connection of the plurality of battery cells 7 in the battery module 6.

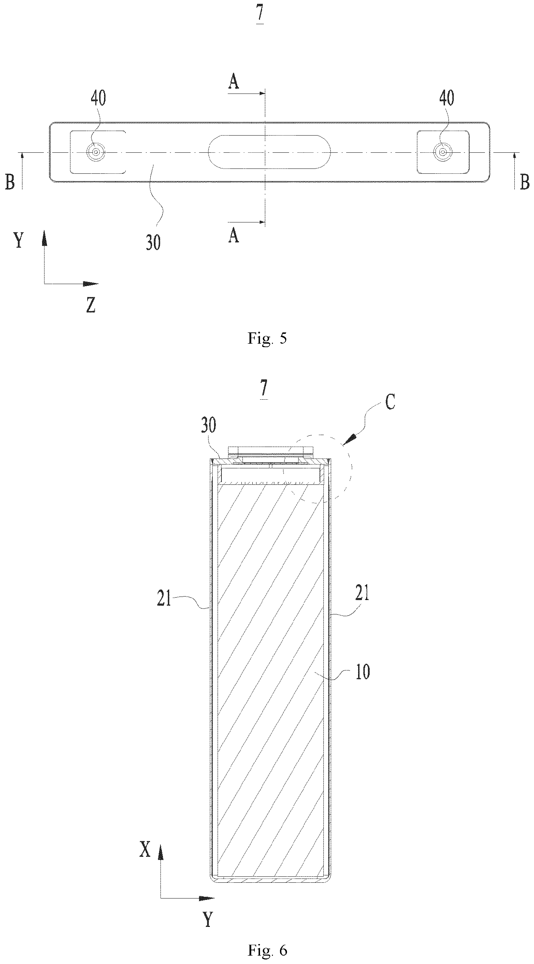

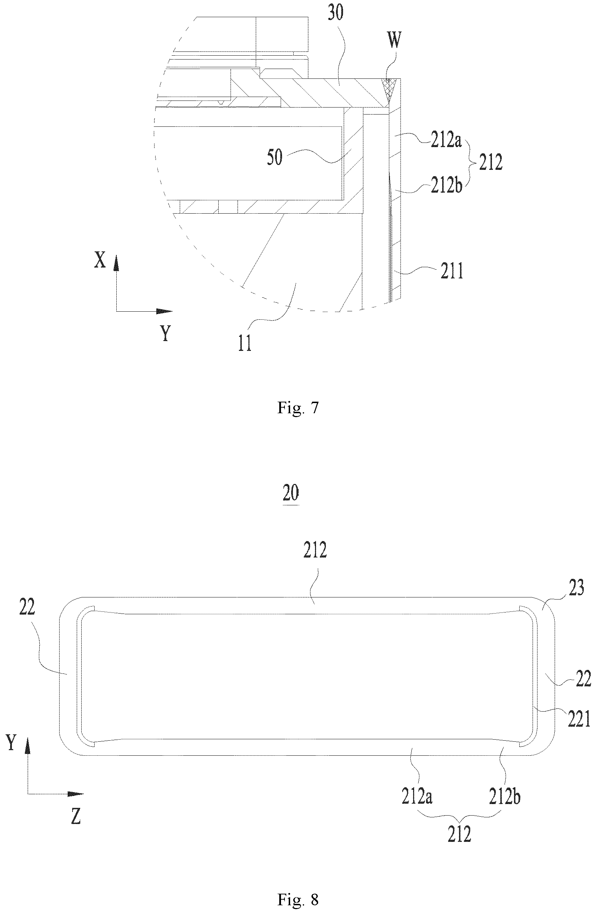

Fig. 4 is a schematic exploded view of a battery cell provided by some embodiments of the present application; Fig. 5 is a schematic top view of a battery cell provided by some embodiments of the present application; Fig. 6 is a schematic cross-sectional view of the battery cell shown in Fig. 5 along a direction A-A; and Fig. 7 is an enlarged schematic view of the battery cell shown in Fig. 6 at a circle frame C.

As shown in Figs. 4 to 7, the embodiments of the present application provide a battery cell 7, which includes a housing 20, an electrode assembly 10 and an end cap 30. The housing 20 has an opening 20a at an end along a first direction X. The electrode assembly 10 is contained in the housing 20, and the electrode assembly 10 has a main body 11 and tabs 12 connected to the main body 11. The end cap 30 is configured for covering the opening 20a. The housing 20 includes a first side plate 21 having a first plate portion 211 and a second plate portion 212 both arranged along the first direction X, wherein the second plate portion 212 is located at an end of the first plate portion 211 near the opening 20a, the second plate portion 212 has a thickness greater than that of the first plate portion 211. The second plate portion 212 is configured for welding with the end cap 30 and forming a welded portion W; an end of the second plate portion 212 close to the first plate portion 211 extends beyond the welded portion W in the first direction X; the main body 11 does not overlap with the second plate portion 212 in a thickness direction Y for the first side plate 21.

The housing 20 is a hollow structure, and an accommodating cavity for accommodating the electrode assembly 10 and the electrolyte is formed inside the housing 20. The housing 20 may be in various shapes, such as cylinder, cuboid and so on. The shape of the housing 20 may be determined according to the specific shape of the electrode assembly 10. For example, if the electrode assembly 10 has a cylindrical structure, a cylindrical housing may be selected; and if the electrode assembly 10 has a rectangular structure, a rectangular housing may be selected.

The end cap 30 is sealingly connected with the housing 20 to form a sealed space for accommodating the electrode assembly 10 and the electrolyte. Exemplarily, the end cap 30 is connected to the housing 20 by welding. The welding may realize sealing and fixing between the end cap 30 and the housing 20 at the same time.

In some examples, one end of the housing 20 along the first direction X has an opening 20a, and one end cap 30 is provided and covers the opening 20a of the housing 20. In some other examples, both ends of the housing 20 along the first direction X have openings 20a, and two end caps 30 are provided respectively cover the two openings 20a of the housing 20.

Exemplarily, the first direction X is parallel to the thickness direction of the end cap 30.

The electrode assembly 10 is a core component for the battery cell 7 to realize charging and discharging function, and it includes a first pole piece, a second pole piece and a spacer, the polarity of the first pole piece and the second pole piece are opposite, and the spacer is used to insulate the first pole piece from the second pole piece. The electrode assembly 10 mainly relies on metal ions to move between the first pole piece and the second pole piece.

One of the first pole piece and the second pole piece is a positive pole piece, and the other is a negative pole piece.

The electrode assembly 10 may be a wound structure, a stacked structure or other structures. There may be one or more first pole pieces, and one or more second pole pieces. The number of the first pole pieces and the second pole pieces may be determined according to the structure of the electrode assembly 10.

There may be one or more electrode assemblies 10, which is not limited in this embodiment.

The main body 11 is an electricity generation portion of the electrode assembly 10, and the active materials inside it is used for electrochemical reaction with the electrolyte etc., so as to generate the charging and discharging process. The tab 12 is led out from an end of the main body 11 and is configured to lead out the electric energy generated by the main body 11.

The main body 11 includes a positive current collector portion, a positive active material layer, a negative current collector portion, a negative active material layer and a separator, and the tab 12 includes a positive tab and a negative tab.

Exemplarily, the first side plate 21 is generally a plate structure parallel to the first direction X.

The housing 20 may include one or more first side plates 21. For example, for a rectangular housing 20, there may be two first side plates 21, and the two first side plates 21 are arranged opposite to each other. For a cylindrical housing 20, there may be one first side plate 21, and the first side plate 21 is generally cylindrical.

The second plate portion 212 may be disposed on one side of the first plate portion 211 along the first direction X, or may be disposed on both sides of the first plate portion 211 along the first direction X.

In some examples, one end of the housing 20 along the first direction X has an opening 20a, the second plate portion 212 is disposed on one side of the first plate portion 211 along the first direction X, and one end cap 30 is disposed and welded to the second plate portion 212. In other examples, both ends of the housing 20 along the first direction X have openings 20a, two second plate portions 212 are respectively disposed on both sides of the first plate portion 211 along the first direction X, and two end caps 30 are disposed and welded to the two second plate portions 212 respectively.

The thickness of the second plate portion 212 is greater than that of the first plate portion 211 so that the second plate portion 212 has higher strength. The second plate portion 212 may not only protrude from an inner surface of the first plate portion 211, but also protrude from an outer surface of the first plate portion 211.

In this embodiment, in a plane perpendicular to the thickness direction Y of the first side plate 21, the projection of the main body 11 is not overlapped with the projection of the second plate portion 212.

In a direction parallel to the first direction X and gradually approaching the first plate portion 211, the second plate portion 212 extends beyond the welded portion W.

After the welded portion W is formed, thermal stress remains in a region of the second plate portion 212 near the welded portion W. In this embodiment, a thickness of the second plate portion 212 near the opening 20a is increased and an end of the second plate portion 212 near the first plate portion 211 is extended beyond the welded portion W, to ensure the strength of the first side plate 21 near the welded portion W, so as to reduce the risk of cracking of the first side plate 21 and improve the safety. The main body 11 is not overlapped with the second plate portion 212 in the thickness direction Y for the first side plate 21, which may reduce the risk of the main body 11 directly colliding with or squeezing the second plate portion 212, so as to further reduce the risk of cracking of the second plate portion 212 and improve the safety.

In this embodiment, only the thickness of the second plate portion 212 is increased. Compared with the scheme of increasing the thickness of the first side plate 21 as a whole, this embodiment may reduce the weight of the housing 20 and increase the energy of the battery cell 7.

In some embodiments, the battery cell 7 further includes two electrode terminals 40 installed on the end cap 30, and the two electrode terminals 40 are respectively configured to electrically connect the first pole piece and the second pole piece, so as to export electrical energy generated by the electrode assembly 10.

In some embodiments, the second plate portion 212 protrudes from the inner surface of the first plate portion 211. When the second plate portion 212 has a certain thickness, the second plate portion 212 protruding from the inner surface of the first plate portion 211 may reduce a size of the second plate portion 212 protruding from an outer surface of the first plate portion 211, so as to further reduce the maximum size of the housing 20, fully utilize inner space of the housing 20, and increase energy density of the battery cell 7.

The inner surface of the first plate portion 211 is a surface of the first plate portion 211 facing the electrode assembly 10, and the outer surface of the first plate portion 211 is a surface of the first plate portion 211 facing away from the electrode assembly 10.

In this embodiment, the main body 11 is not overlapped with the second plate portion 212 in the thickness direction Y of the first side plate 21, so that the extrusion of the portion of the second plate portion 212 protruding from the inner surface of the first plate portion 211 can be reduced, so as to reduce the risk of compressing the main body 11, reduce the stress on the main body 11, and improve the charging and discharging performance of the main body 11.

In some embodiments, the first plate portion 211 is a plate structure with uniform thickness.

In some embodiments, the outer surface of the first plate portion 211 is flush with the outer surface of the second plate portion 212. This embodiment may ensure the smoothness of the outer surface of the first side plate 21 and improve the appearance of the housing 20.

In some embodiments, the battery cell 7 further includes an insulating member 50 disposed between the end cap 30 and the main body 11 and abutted against the main body 11. An end of the second plate portion 212 near the first plate portion 211 does not protrude beyond a surface of the insulating member 50 abutting against the main body 11 in the first direction X.

In this embodiment, the insulating member 50 may insulate and isolate the end cap 30 from the main body 11, so as to reduce the risk that the end cap 30 conducting the positive and negative electrodes in the main body 11 and improve the safety. The insulating member 50 is abutted against the main body 11 along the first direction X, so as to reduce shaking amplitude of the main body 11 during battery cell 7 vibrates, reduce the risk of misalignment of positive and negative electrode plates, and improve charging and discharging performance of electrode assembly 10. The insulating member 50 may limit the position of the main body 11 along the first direction X, so as to reduce the possibility of the main body 11 colliding with the second plate portion 212 during battery cell 7 vibrates and reduce the risk of cracking of the second plate portion 212.

In some embodiments, the second plate portion 212 includes a base portion 212a and a first transition portion 212b, and the first transition portion 212b is connected between the base portion 212a and the first plate portion 211. A thickness of the first transition portion 212b is gradually decreasing along a direction away from the base portion 212a.

The base portion 212a is configured for welding with the end cap 30 to form a welded portion W.

In this embodiment, by providing the first transition portion 212b, a smooth transition may be achieved at a junction of the first plate portion 211 and the second plate portion 212, reducing stress concentration and reducing the risk of cracking of the first side plate 21.

In some embodiments, the first transition portion 212b is formed by rounding or chamfering the second plate portion 212.

A thickness of an end of the first transition portion 212b connected to the base portion 212a is equal to the thickness of the base portion 212a, and a thickness of an end of the first transition portion 212b connected to the first plate portion 211 is equal to the thickness of the first plate portion 211.

In some embodiments, in the first direction X, a ratio of a size L1 of the welded portion W to a total size L2 of the second plate portion 212 is 0.1-0.5.

The smaller the value of L1/L2, the lower the connection strength between the end cap 30 and the second plate portion 212; if the value of L1/L2 is too small, the connection between the end cap 30 and the second plate portion 212 is prone to failure. The larger the value of L1/L2, the smaller the distance between the welded portion W and the first plate portion 211; if the value of L1/L2 is too large, the thermal stress generated by welding may be transmitted to the first plate portion 211, thus causing the risk of cracking of the first plate portion 211. The inventor has found through experiments that, the value of L1/L2 is limited to 0.1-0.5 to ensure the strength of the connection between the end cap 30 and the second plate portion 212 and the strength of the first plate portion 211.

In some embodiments, the value of L1 is 0.5 mm - 2 mm, and the value of L2 is 3 mm - 8 mm.

In some embodiments, a ratio of the thickness of the second plate portion 212 to the thickness of the first plate portion 211 is 1.05-3.

When the first plate portion 211 has a certain thickness, the greater the thickness of the second plate portion 212, the higher the strength of the second plate portion 212, and the less likely the second plate portion 212 will crack. Of course, the greater the thickness of the second plate portion 212, the greater the space occupied by the second plate portion 212, the greater the weight of the housing 20, and the lower the energy density of the battery cell 7. In this embodiment, the ratio of the thickness of the second plate portion 212 to the thickness of the first plate portion 211 is limited to 1.05-3 to balance the strength of the second plate portion 212 and the energy density of the battery cell 7.

Optionally, the thickness of the base portion 212a is used as the thickness of the second plate portion 212.

In some embodiments, the thickness of the first plate portion 211 is 0.4 mm - 0.6 mm, and the thickness of the second plate portion 212 is 0.7mm - 0.8mm.

Fig. 8 is a schematic top view of a housing of a battery cell provided by some embodiments of the present application.

As shown in Figs. 7 and 8, in some embodiments, the second plate portion 212 is connected to at least a middle region of the first plate portion 211 along a second direction Z, and the second direction Z is perpendicular to the first direction X and the thickness direction Y.

During the charging process of the electrode assembly 10, the main body 11 will expand and squeeze the first plate portion 211; during the discharging process of the electrode assembly 10, the main body 11 will shrink. Therefore, the expansion and shrinking of the main body 11 will cause the first side plate 21 to swing back and forth with the welded portion W as a base point. The larger the expansion of a middle portion of the main body 11 along the second direction Z, the greater the oscillation amplitude of a middle portion of the first side plate 21 along the second direction Z. Therefore, a region of the first side plate 21 located in the middle along the second direction Z and close to the welding portion W is easy to crack under the combined action of thermal stress and swing stress.

In this embodiment, the second plate portion 212 is connected to at least the middle region of the first plate portion 211 along the second direction Z, which may enhance the strength of the area with greater stress on the first side plate 21 to reduce the risk of cracking on the first side plate 21.

In this embodiment, the first side plate 21 passes through the second plate portion 212 along a centerline in the second direction Z, which is parallel to the first direction X.

In some embodiments, a ratio of a size of the second plate portion 212 along the second direction Z to a size of the first plate portion 211 along the second direction Z is 0.3 - 1.

In some embodiments, the second plate portion 212 is continuously disposed in the second direction Z, and an edge of the second plate portion 212 along the second direction Z is flush with an edge of the first plate portion 211 along the second direction Z.

In this embodiment, an end of the first side plate 21 near the opening is thickened as a whole, so as to further reduce the risk of cracking of the first side plate 21.

In some embodiments, the second plate portion 212 comprises a base portion 212a and two second transition portions 212c, and the two second transition portions 212c are respectively located at two ends of the base portion 212a along the second direction Z. Thicknesses of the second transition portions 212c are gradually decreasing along the direction away from the base portion 212a.

In this embodiment, by setting the second transition portion 212c, a smooth transition may be achieved at a junction between the second plate portion 212 and other parts of the housing 20 (such as the second side plate described below), reducing stress concentration and reducing the risk of cracking of the first side plate 21.

In some embodiments, the second transition portion 212c is formed by rounding or chamfering the second plate portion 212.

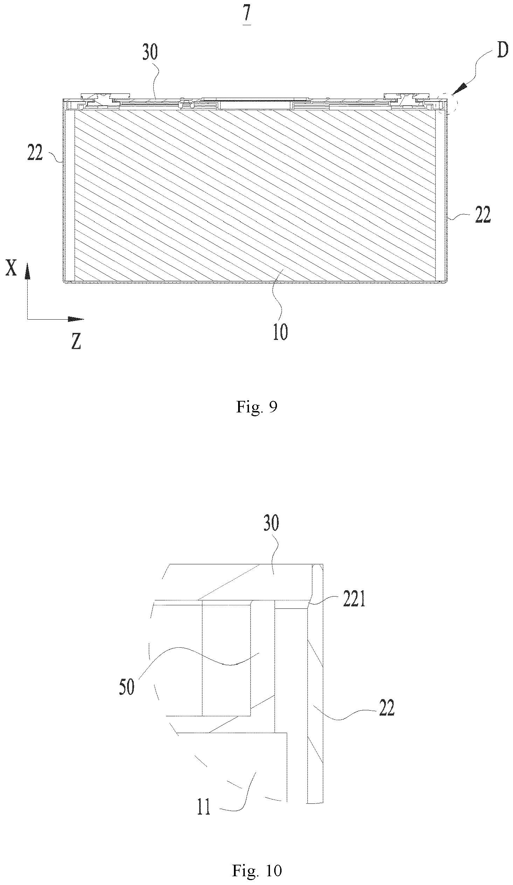

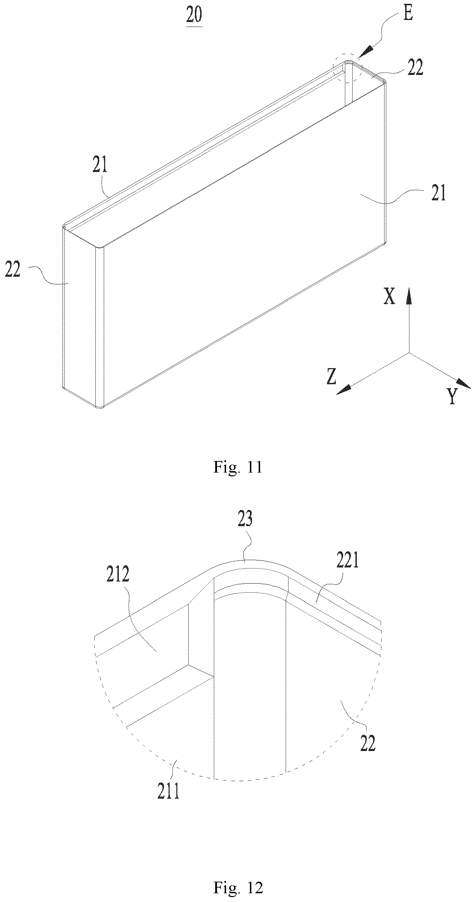

Fig. 9 is a schematic cross-sectional view of the battery cell shown in Fig. 5 along a B-B direction; Fig. 10 is an enlarged schematic view of the battery cell shown in Fig. 9 at a circle D; Fig. 11 is a schematic structural view of a housing of a battery cell provided in some embodiments of the present application; and Fig. 12 is an enlarged schematic view of the housing shown in Fig. 11 at a circle frame E.

As shown in Figs. 9 to 12, in some embodiments, the housing 20 includes two first side plates 21 oppositely disposed along the thickness direction Y and two second side plates 22 oppositely disposed along the second direction Z, the first direction X, the second direction Z and the thickness direction Y are perpendicular to each other. Each of the second side plates is provided with a recess 221, and the recess 221 is recessed from an end surface of the second side plate 22 along the first direction X. A portion of the end cap 30 is contained in the recess 221 and abuts against a bottom surface of the recess 221. A thickness of a portion of the second side plate 22 corresponding to a side surface of the recess 221 is greater than the thickness of the first plate portion 211.

The first side plate 21 may be directly connected to the second side plate 22, or may be indirectly connected to the second side plate 22 through other structures of the housing 20.

Exemplarily, the bottom surface of the recess 221 may be a plane. The included angle between the bottom surface of the recess 221 and the side surface of the recess 221 may be 80° - 170 °.

In this embodiment, the bottom surface of the recess 221 may support the end cap 30 and may limit the position of the end cap 30 during the end cap 30 extends into the housing 20. The portion of the second side plate 22 corresponding to a side surface of the recess 221 may be configured for welding with the end cap 30. Even if the present embodiment provides a recess 221 on the second side plate 22, the strength of the portion of the second side plate 22 corresponding to the side surface of the recess 221 can be guaranteed, so as to reduce the risk of cracking the second side plate 22.

In some embodiments, the housing 20 further includes an arc-shaped transition plate 23, and the transition plate 23 connects the adjacent first side plate 21 and second side plate 22.

In some embodiments, the transition plate 23 is also provided with a recess, and the recess of the transition plate 23 is recessed from an end surface of the transition plate 23 along the first direction X. Exemplarily, the recess of the transition plate 23 communicates with the recess 221 of the second side plate 22.

In some embodiments, in the first direction X, an end of the second plate portion 212 near the first plate portion 211 extends beyond the bottom surface of the recess 221.

The bottom surface of the recess 221 is configured to support the end cap 30, so the bottom surface of the recess 221 will also limit the position of the end cap 30. In the present embodiment, the end of the second plate portion 212 near the first plate portion 211 extends beyond the bottom surface of the recess 221, so that the end of the second plate portion 212 near the first plate portion 211 extends beyond the end cap 30 and the welded portion W, thereby ensuring the strength of the first side plate 21 at an area near the welded portion W, reducing the risk of cracking of the first side plate 21 and improving the safety.

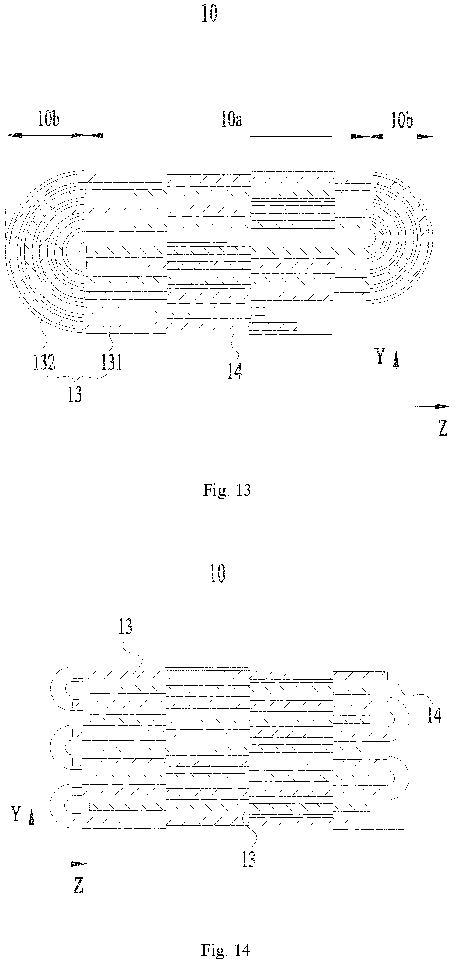

Fig. 13 is a schematic structural view of an electrode assembly of a battery cell provided in some embodiments of the present application.

As shown in Fig. 13, in some embodiments, the electrode assembly 10 is a wound structure and includes a straight region 10a. The electrode assembly 10 has pole pieces 13 including a plurality of straight portions 131 located in the straight region 10a, and the plurality of straight portions 131 are stacked along the thickness direction Y.

The straight region 10a is a region where the electrode assembly 10 has a straight structure, and the portion of the pole piece 13 located in the straight region 10a (i.e., the straight portion 131) is substantially straight. The plurality of straight portions 131 are stacked in the thickness direction Y. Exemplarily, the straight portion 131 is generally straight.

During the charging process of the electrode assembly 10, the pole piece 13 will expand along its own thickness direction Y. In the wound electrode assembly 10, the expansion of the electrode assembly 10 along the stacking direction of the straight portion 131 is the largest, so the first side plate is subjected to a greater force; the embodiment of the present application increases the thickness of the second plate portions, to reduce the risk of cracking of the first side plate.

In some embodiments, the electrode assembly 10 further includes a bending region 10b, and the pole piece 13 further includes a bending portion 132 located in the bending region 10b. The bending region 10b is a region where the electrode assembly 10 has a bending structure, and a portion of the pole piece 13 located in the bending region 10b (i.e., the bending portion 132) is bent. Exemplarily, the bent portion 132 is generally bent into an arc shape.

In some embodiments, the pole piece 13 includes a positive pole piece and a negative pole piece. In this embodiment, the positive pole piece, the separator 14 and the negative pole piece may be stacked in sequence and wound more than two times to form the electrode assembly 10. The electrode assembly 10 is flat. Both the positive pole piece and the negative pole piece include a straight portion 131 and a bent portion 132.

Fig. 14 is a schematic structural view of an electrode assembly of a battery cell provided in further embodiments of the present application.

As shown in Fig. 14, in some embodiments, the electrode assembly 10 includes a plurality of pole pieces 13, and the plurality of pole pieces 13 are stacked along the thickness direction Y.

During the charging process of the electrode assembly 10, the pole piece 13 will expand along its own thickness direction Y. In this embodiment, the expansion of the electrode assembly 10 along the stacking direction of the plurality of pole pieces 13 is the largest, so the force on the first side plate is relatively large; in the embodiment of the present application, the thickness of the second plate portion is increased to reduce the risk of cracking of the first side plate.

In some embodiments, the electrode assembly 10 includes a plurality of positive pole pieces and a plurality of negative pole pieces, and the plurality of positive pole pieces and the plurality of negative pole pieces are alternately stacked.

In other embodiments, the electrode assembly 10 includes a plurality of positive pole pieces and one negative pole piece, the negative pole piece are bent continuously to form multiple negative stacked sections, and the multiple negative stacked sections and the plurality of positive pole pieces are alternately stacked.

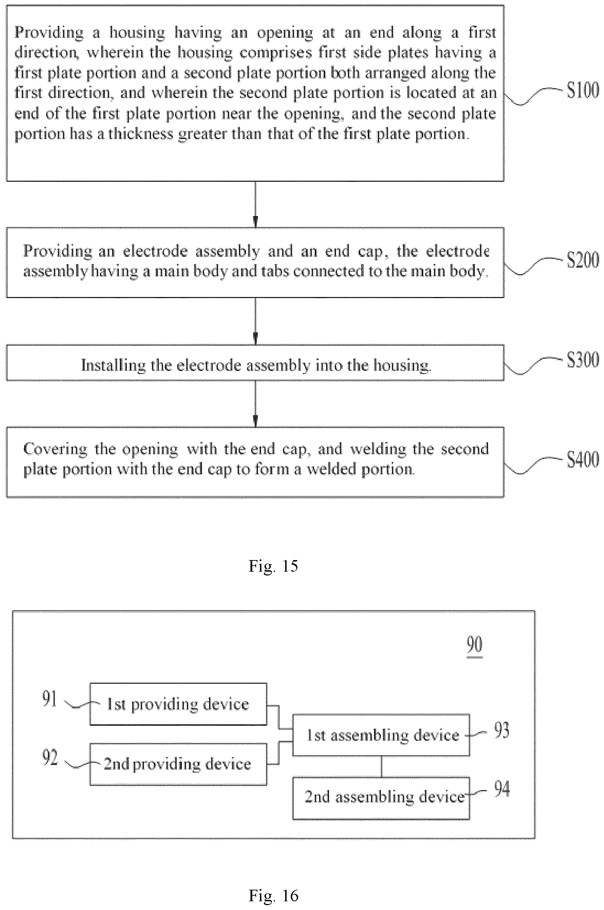

Fig. 15 is a schematic flowchart of a method for manufacturing a battery cell provided in some embodiments of the present application.

As shown in Fig. 15, the embodiments of the present application provide a method for manufacturing a battery cell, including:
S100: providing a housing having an opening at an end along a first direction, wherein the housing comprises a first side plate having a first plate portion and a second plate portion both arranged along the first direction, and wherein the second plate portion is located at an end of the first plate portion near the opening, and the second plate portion has a thickness greater than that of the first plate portion;
S200: providing an electrode assembly and an end cap, the electrode assembly having a main body and tabs connected to the main body;
S300: installing the electrode assembly into the housing;
S400: covering the opening with the end cap, and welding the second plate portion with the end cap to form a welded portion; wherein the end of the second plate portion near the first plate portion extends beyond the welded portion in the first direction; the main body is not overlapped with the second plate portion in a thickness direction for the first side plate.

It should be noted that, for the relevant structures of the battery cell manufactured by the above battery cell manufacturing method, reference may be made to the battery cell provided in the foregoing embodiments.

Based on the above-mentioned method for manufacturing a battery cell, it is not necessary to follow the above-mentioned steps in sequence, that is, the steps may be performed in the order mentioned in the embodiments, or may be performed in a different order than the order mentioned in the embodiments, or in several steps at the same time. For example, steps S 100 and S200 are executed in no particular order, and may also be executed at the same time.

Fig. 16 is a schematic block diagram of a system for manufacturing a battery cell provided by some embodiments of the present application.

As shown in Fig. 16, the system 90 for manufacturing the battery cell according to the embodiments of the present application includes a first providing device 91, a second providing device 92, a first assembling device 93 and a second assembling device 94. The first providing device 91 is configured for providing a housing having an opening at an end along a first direction, wherein the housing comprises a first side plate having a first plate portion and a second plate portion both arranged along the first direction, and wherein the second plate portion is located at an end of the first plate portion near the opening, and the second plate portion has a thickness greater than that of the first plate portion. The second providing device 92 is configured for providing an electrode assembly and an end cap, the electrode assembly having a main body and tabs connected to the main body. The first assembling device 93 is configured for installing the electrode assembly into the housing. The second assembling device 94 is configured for covering the opening with the end cap and welding the second plate portion with the end cap to form a welded portion; wherein the end of the second plate portion near the first plate portion extends beyond the welded portion in the first direction; the main body is not overlapped with the second plate portion in a thickness direction for the first side plate.

For the relevant structures of the battery cell manufactured by the above manufacturing system, reference may be made to the battery cell provided in the above embodiments.

It should be noted that, in the case of no conflict, the embodiments in the present application and the features in the embodiments can be combined with each other.

Finally, it should be noted that the above embodiments are only used to illustrate the technical solutions of the present application, rather than limiting them; although the present application has been described in detail with reference to the foregoing embodiments, those of ordinary skill in the art should understand that: the technical solutions recited in the aforementioned embodiments can still be modified, or some of the technical features can be equivalently replaced, but these modifications or replacements do not make the essence of the corresponding technical solutions deviate from the spirit and scope of the technical solutions in the various embodiments of this application.

## Claims

1. A battery cell, comprising:
a housing having an opening at an end along a first direction;
an electrode assembly contained in the housing, the electrode assembly having a main body and tabs connected to the main body; and
an end cap for covering the opening;
wherein the housing comprises a first side plate having a first plate portion and a second plate portion both arranged along the first direction, and wherein the second plate portion is located at an end of the first plate portion near the opening, and the second plate portion has a thickness greater than that of the first plate portion;
wherein the second plate portion is configured for welding with the end cap and forming a welded portion; an end of the second plate portion near the first plate portion extends beyond the welded portion in the first direction; the main body is not overlapped with the second plate portion in a thickness direction for the first side plate.

2. The battery cell of claim 1, wherein the second plate portion protrudes from an inner surface of the first plate portion.

3. The battery cell of claim 2, further comprising an insulating member disposed between the end cap and the main body and abutted against the main body;
the end of the second plate portion near the first plate portion does not protrude beyond a surface of the insulating member abutting against the main body in the first direction.

4. The battery cell of claim 2 or 3, wherein an outer surface of the first plate portion is flush with an outer surface of the second plate portion.

5. The battery cell of any one of claims 1-4, wherein the second plate portion comprises a base portion and a first transition portion, and the first transition portion is connected between the base portion and the first plate portion; a thickness of the first transition portion is gradually decreasing along a direction away from the base portion.

6. The battery cell of any one of claims 1-5, wherein the second plate portion is connected to at least a middle region of the first plate portion along a second direction, and the second direction is perpendicular to the first direction and the thickness direction.

7. The battery cell of claim 6, wherein the second plate portion is continuously disposed in the second direction, and an edge of the second plate portion along the second direction is flush with an edge of the first plate portion along the second direction.

8. The battery cell of claim 6 or 7, wherein the second plate portion comprises a base portion and two second transition portions, and the two second transition portions are respectively located at two ends of the base portion along the second direction; thicknesses of the second transition portions are gradually decreasing along a direction away from the base portion.

9. The battery cell of any one of claims 1-8, wherein the housing comprises two first side plates oppositely disposed along the thickness direction and two second side plates oppositely disposed along the second direction, the first direction, the second direction and the thickness direction are perpendicular to each other;
each of the second side plates is provided with a recess, and the recess is recessed from an end surface of the second side plate along the first direction; a portion of the end cap is contained in the recess and abuts against a bottom surface of the recess;
a thickness of a portion of the second side plate corresponding to a side surface of the recess is greater than the thickness of the first plate portion.

10. The battery cell of claim 9, wherein the end of the second plate portion near the first plate portion extends beyond the bottom surface of the recess in the first direction.

11. The battery cell of any one of claims 1-10, wherein the electrode assembly is a wound structure and comprises a straight region, and the electrode assembly has pole pieces comprising a plurality of straight portions located in the straight region, the plurality of straight portions are stacked along the thickness direction; or
the electrode assembly comprises a plurality of pole pieces stacked along the thickness direction.

12. The battery cell of any one of claims 1-11, wherein in the first direction, a ratio of a size of the welding portion to a total size of the second plate portion is 0.1-0.5.

13. The battery cell of any one of claims 1-12, wherein a ratio of the thickness of the second plate portion to the thickness of the first plate portion is 1.05-3.

14. A battery comprising a plurality of the battery cells of any one of claims 1-13.

15. A powered device, comprising the battery cell of any one of claims 1-13, wherein the battery cell is configured for providing electric energy.

16. A method for manufacturing a battery cell, comprising:
providing a housing having an opening at an end along a first direction, wherein the housing comprises a first side plate having a first plate portion and a second plate portion both arranged along the first direction, and wherein the second plate portion is located at an end of the first plate portion near the opening, and the second plate portion has a thickness greater than that of the first plate portion;
providing an electrode assembly and an end cap, the electrode assembly having a main body and tabs connected to the main body;
installing the electrode assembly into the housing;
covering the opening with the end cap, and welding the second plate portion with the end cap to form a welded portion;
wherein an end of the second plate portion near the first plate portion extends beyond the welded portion in the first direction; the main body is not overlapped with the second plate portion in a thickness direction for the first side plate.

17. A manufacturing system for a battery cell, comprising:
a first providing device for providing a housing having an opening at an end along a first direction, wherein the housing comprises a first side plate having a first plate portion and a second plate portion both arranged along the first direction, and wherein the second plate portion is located at an end of the first plate portion near the opening, and the second plate portion has a thickness greater than that of the first plate portion;
a second providing device for providing an electrode assembly and an end cap, the electrode assembly having a main body and tabs connected to the main body;
a first assembling device for installing the electrode assembly into the housing;
a second assembling device for covering the opening with the end cap and welding the second plate portion with the end cap to form a welded portion;
wherein an end of the second plate portion near the first plate portion extends beyond the welded portion in the first direction; the main body is not overlapped with the second plate portion in a thickness direction for the first side plate.
